Europäisches Patentamt

European Patent Office

Office européen des brevets

(19)

(11) Numéro de publication : **0 296 940 B1**

# (12) FASCICULE DE BREVET EUROPEEN

(45) Date de publication du fascicule du brevet :
**27.12.91 Bulletin 91/52**

(51) Int. Cl.⁵ : **B60R 22/20**

(21) Numéro de dépôt : **88401490.3**

(22) Date de dépôt : **15.06.88**

(54) Dispositif de réglage de la position d'un renvoi de sangle notamment de ceinture de sécurité de véhicule automobile.

(30) Priorité : **19.06.87 FR 8708636**

(43) Date de publication de la demande :
**28.12.88 Bulletin 88/52**

(45) Mention de la délivrance du brevet :
**27.12.91 Bulletin 91/52**

(84) Etats contractants désignés :
**DE ES GB IT SE**

(56) Documents cités :
**DE-A- 2 460 092**
**DE-A- 3 112 458**

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Escaravage, Gérard**
**5 Impasse des Graverots**
**F-25700 Valentigney (FR)**

(74) Mandataire : **Mestre, Jean et al**
**c/o CABINET LAVOIX 2, place d'Estienne d'Orves**
**F-75441 Paris Cédex 09 (FR)**

## Description

La présente invention concerne un dispositif de réglage de la position d'un renvoi de sangle notamment de ceinture de sécurité pour véhicule automobile.

Sur la plupart des véhicules, ce renvoi de sangle est disposé sur un doigt d'ancrage fixé sur la carrosserie du véhicule, à une hauteur convenant à une majorité d'utilisateurs dits de taille normale.

Toutefois, cette hauteur ne convient pas à certains utilisateurs, en particulier aux personnes de petite taille.

Pour résoudre ce problème, on connaît dans l'état de la technique un certain nombre de dispositifs de réglage de la hauteur de ce renvoi de sangle.

Ainsi, par exemple, on connaît d'après le document FR.2484343, un dispositif de réglage en hauteur d'un point d'ancrage d'une ceinture de sécurité, dans lequel un coulisseau se déplace le long d'une tige support filetée dans la plage de réglage de l'ancrage, ladite tige étant montée à rotation entre les parois d'un boîtier fixé à un élément de la carrosserie due véhicule. La face frontale de ce coulisseau porte une ferrure d'ancrage de la ceinture et sa face dorsale porte un organe d'immobilisation en rotation du coulisseau qui le guide le long de la paroi de fond du boîtier.

On connait également d'après le document FR. 2488201, un dispositif pour régler la hauteur d'une ferrure de renvoi d'une ceinture de sécurité de véhicule, comportant un organe de réglage portant la ferrure avec un verrou s'enclenchant dans des crans d'arrêt d'un guidage rectiligne, le verrou pouvant être dégagé par un mécanisme de manoeuvre.

On connaît également d'après le document FR. 2482539, un dispositif pour le réglage du point d'ancrage d'une ceinture de sécurité, disposé au-dessus de l'épaule d'un occupant d'un véhicule, dans lequel le point d'ancrage est porté par un curseur de glissière monté déplaçable dans une glissière et immobilisable en position par un cliquet coopérant avec une série d'orifices réalisés dans la glissière.

Le document FR.2513887 décrit quant à lui un dispositif pour le réglage de la position en hauteur de la ferrure supérieure du baudrier d'une ceinture de sécurité. Ce dispositif comprend une glissière solidaire de la carrosserie du véhicule, munie d'une fente de guidage et d'évidements, dans lesquels pénètre au moins un organe de blocage monté sur un coulisseau qui porte la ferrure et peut être verrouillé et déverrouillé au moyen d'un organe d'actionnement manuel.

Le document FR.2543838 décrit un dispositif d'ancrage pour point haut de ceinture de sécurité, comprenant un rail ayant plusieurs trous qui sont en deux parties, et un ergot de blockage qui peut être commandé par un bouton de manoeuvre. Le réglage de la position du point d'ancrage est obtenu par extraction de l'ergot du trou, déplacement du coulisseau et réintroduction de l'ergot dans un autre trou.

Enfin, le document FR.2536288 décrit un dispositif pour le réglage en hauteur d'une ceinture de sécurité pour véhicule automobile, constitué par une glissière de guidage comportant des deux côtés, des ouvertures de verrouillage disposées les unes au-dessus des autres, et un chariot qui peut être déplacé dans la glissière, ce chariot portant une pièce de fixation ou de renvoi de la ceinture et comportant des éléments d'arrêt qui peuvent être déplacés transversalement par rapport à la direction du mouvement du chariot, au moyen d'une touche en s'opposant à l'action d'un ressort, pour passer d'une position de verrouillage à une position de déverrouillage.

Une autre solution est divulguée dans le document DE A 2460092. Le dispositif selon ce document comprend un boîtier avec une crémaillère à encoches obliques, une broche avec un rebord destinée à être reliée à une sangle de ceinture et prévue pour être logée à volonté dans l'une des encoches, un plateau presseur agissant sur la broche pour la maintenir dans l'encoche où elle à été placée et un ressort pressant sur le plateau.

Cependant, tous ces dispositifs présentent un certain nombre d'inconvénients, notamment au niveau des possibilités de réglage, de leur structure relativement complexe et donc de leurs coûts de fabrication et de montage relativement élevés.

Par ailleurs, dans la plupart des dispositifs connus, les organes de verrouillage sont sollicités vers leur position de verrouillage par des moyens élastiques qui exercent sur ceux-ci, une force de maintien relativement importante. Ceci oblige l'utilisateur qui désire déplacer le renvoi de sangle, à exercer sur les organes de déplacement de ces moyens de verrouillage, une force relativement importante pour déplacer les moyens de verrouillage vers leur position escamotée et permettre ainsi le déplacement du renvoi de sangle.

Le but de l'invention est donc de résoudre les problèmes évoqués ci-dessus en proposant un dispositif de réglage simple, rapide et précis, de la position du renvoi de sangle, pour adapter celle-ci à la morphologie de l'utilisateur.

A cet effet, l'invention a pour objet un dispositif de réglage de la position d'un renvoi de sangle, notamment de ceinture de sécurité de véhicule automobile, entre deux positions extrêmes, du type exposé dans le préambule de la revendication principale et dont les particularités sont mentionnées notamment dans la partie caractérisante de celle-ci.

L'invention sera mieux comprise à l'aide de la description qui va suivre, donnée uniquement à titre d'exemple et faite en se référant aux dessins annexés, sur lesquels :

— la Fig. 1 représente une vue en coupe d'un dispositif selon l'invention ; et
— la Fig.2 représente une vue de face d'un dispositif selon l'invention.

Ainsi qu'on peut le voir sur ces figures, un dispositif de réglage de la position d'un renvoi de sangle, notamment de ceinture de sécurité de véhicule automobile, selon l'invention, comporte un rail de guidage 1, se présentant sous la forme d'un boîtier sans fond, fixé sur le montant 2 du véhicule automobile et comprenant une lumière 3 par exemple droite, dans laquelle se déplace une broche 4 de fixation du renvoi de sangle 5.

La fixation du rail 1 sur le montant 2 du véhicule est par exemple assurée dans la partie supérieure de celui-ci par une portion repliée 6 de celui-ci, s'engageant dans un évidement 7 du montant, et dans sa partie inférieure par un système vis-écrou 8. Un habillage 9 de type connu en soi, peut également être prévu autour de l'ensemble pour améliorer la présentation de celui-ci.

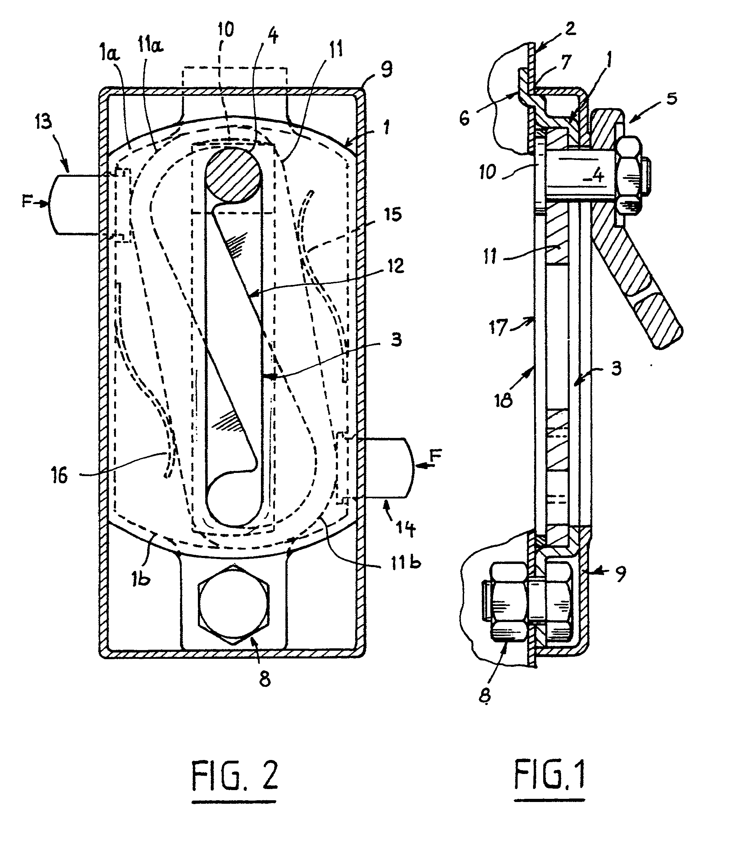

La broche 4 de fixation du renvoi 5 comporte une embase 10, par exemple carrée, et un organe formant verrou 11 est disposé entre cette embase et le rail 1 comme on peut le voir plus particulièrement sur la Fig. 1. Cet organe 11 formant verrou, comporte une lumière 12 (Fig. 2), qui présente la forme générale d'un S et dont la largeur est inférieure à la dimension de l'embase 11 de la broche 4 de fixation du renvoi pour bloquer celle-ci dans le rail. Cet organe formant verrou est monté déplaçable par l'intermédiaire de moyens de commande par exemple 13 et 14 entre une première position de verrouillage illustrée sur la Fig.2, dans laquelle les deux extrémités de la lumière en S, 12, de l'organe formant verrou sont en regard de la lumière 3 du rail pour délimiter deux fenêtres de verrouillage de la broche du renvoi en position, correspondant à deux positions extrêmes de verrouillage, et une seconde position, de déplacement du renvoi, dans laquelle le reste de la lumière 12 de l'organe 11 formant verrou est en regard de la lumière 3 du rail 1 pour permettre le déplacement du renvoi.

Des moyens élastiques 15, 16 sont prévus pour solliciter l'organe formant verrou 11 en position de verrouillage.

Les moyens de commande 13 et 14 sont constitués par deux organes de commande, disposés de part et d'autre du rail, dans la partie supérieure et dans la partie inférieure de celui-ci comme cela est représenté sur la Fig.2. Ces organes de commande sont adaptés pour coopérer chacun avec un bord correspondant de l'organe formant verrou 11 pour déplacer celui-ci vers la position de déplacement de la broche. Les moyens élastiques 15 et 16 sont quant à eux disposés entre l'organe formant verrou 11 et les rebords du rail, du côté opposé aux moyens de commande correspondants, 13 et 14 respectivement.

Avantageusement, ces moyens élastiques 15, 16 peuvent être constitués par des lames élastiques coudées dont une extrémité est par exemple solidaire du rail et l'autre, en appui sur l'organe formant verrou.

Avantageusement également, les extrémités de l'organe 11 formant verrou, c'est à dire les portions 11a et 11b de celui-ci, sont arrondies et adaptées pour coopérer avec des parties 1a et 1b de forme complémentaire du rail afin de faciliter le déplacement de l'organe formant verou entre ses deux positions.

Au repos, les moyens élastiques sollicitent l'organe formant verrou 11 en position de verrouillage comme cela est illustré sur la figure 2. Lorsque l'utilisateur désire déplacer le renvoi de sangle, soit vers la position basse, soit vers la position haute, il exerce sur les moyens de commande 13 et 14, une force illustrée par les flèches F sur cette Fig.2 de manière à enfoncer les organes de commande 13 et 14 et à déplacer l'organe formant verrou 11 vers la position de déplacement de la broche dans laquelle celle-ci peut se déplacer dans la lumière 3 du rail.

Il est à noter qu'une plaque de guidage 17 peut être prévue entre l'organe formant verrou 11 et le montant 2 du véhicule, cette plaque comportant une lumière de guidage 18 adaptée pour recevoir l'embase 10 de la broche 4 de fixation du renvoi de manière à faciliter le déplacement de celui-ci et réduire le bruit engendré à ce niveau.

Le verrouillage du renvoi de sangle, en position, est ainsi assuré de manière très fiable et les forces F à exercer par l'utilisateur lorsqu'il désire déplacer ce renvoi, sont réduites en raison du fait que les lames élastiques n'ont à assurer qu'un rappel de l'organe formant verrou en position de verrouillage, le verrouillage proprement dit étant assuré indépendamment de ces moyens élastiques, par l'organe formant verrou.

En effet, la structure de cet organe formant verrou est telle que plus la traction exercée sur le renvoi est importante plus le verrouillage est efficace.

## Revendications

1. Dispositif de réglage de la position d'un renvoi de sangle, notamment de ceinture de sécurité, entre deux positions extrêmes du type comportant un rail de guidage (1) qui est destiné, à être fixé sur un montant (2) d'un véhicule et qui comprend une lumière (3) dans ce rail, une broche (4) pour la fixation d'un renvoi de sangle (5) qui est engagée mobile dans cette lumière (3) et qui est munie d'une embase (10) qui est d'une dimension plus grande que la largeur d'au moins une partie de cette lumière (3), ainsi que des moyens de sollicitation élastiques (15, 16), caractérisé en ce que cette lumière (3) est une fente, en ce que entre ces rail (1) et embase (10) est disposé un organe formant verrou (11) qui comprend une lumière (12) en forme général de S et de largeur inférieure a la dimension de l'embase (10) de la broche (4) qui y est engagée et qui est monté mobile entre une première position de verrouillage dans laquelle les deux extrémités de la lumière (12) sont en regard de la fente (3) du rail de manière à délimiter deux fenêtres pour emprisonner et verrouiller la broche (4) dans l'une ou l'autre des deux positions extrêmes et une seconde position dans laquelle la partie intermédiaire de la lumière (12) en S entre ces extrémités est en regard de la fente (3) du rail pour permettre de déplacer la broche (4), en ce que ces moyens élastiques (15, 16) de sollicitation tendent a maintenir l'organe formant verrou (1) dans sa première position, et en ce que des moyens de commande (13, 14) sont associés à cet organe formant verrou (11) pour le déplacer vers sa seconde position à l'encontre de la sollicitation de ces moyens élastiques (15, 16).

2. Dispositif selon la revendication 1, caractérisé en ce qu'une plaque de guidage (17) comportant une lumière de guidage (18) de l'embase (10) de la broche (4) du renvoi est disposée entre l'organe formant verrou (11) et le montant (2) du véhicule.

3. Dispositif selon la revendication 1 ou 2, caractérisé en ce que les moyens de commande comprennent deux organes de commande (13, 14) disposés de part et d'autre du rail (1) dans la partie supérieure et dans la partie inférieure de celui-ci, et adaptés pour coopérer chacun avec un bord correspondant de l'organe formant verrou (11), pour le déplacer vers la position de déplacement de la broche et donc du renvoi.

4. Dispositif selon l'une quelconque des revendications précédentes, caractérisé en ce que les moyens élastiques (15, 16) sont disposés entre l'organe formant verrou (11) et le rail (1) du côté opposé aux moyens de commande correspondants.

5. Dispositif selon l'une quelconque des revendications précédentes, caractérisé en ce que les moyens élastiques comprennent des lames élastiques coudées (15, 16) dont une extrémité est solidaire du rail (1) et l'autre, en appui sur l'organe formant verrou (11).

6. Dispositif selon l'une quelconque des revendication précédentes, caractérisé en ce que les extrémités (11a, 11b) de l'organe formant verrou (11) sont arrondies et adaptées pour coopérer avec des parties (1a, 1b) de forme complémentaire du rail (1).


**Patentansprüche**

1. Vorrichtung zur Einstellung der Position einer Gurtumlenkung, insbesondere für einen Sicherheitsgurt, zwischen zwei Endstellungen, einer Art mit Führungsschiene (1), welche für eine Befestigung an einer Säule (2) eines Fahrzeugs bestimmt ist und ein Langloch (3) in dieser Schiene aufweist, einem Dorn (4) zur Halterung der Gurtumlenkung (5), welcher beweglich in das Langloch (3) eingesetzt ist und mit einer Fußplatte (10) versehen ist, deren Abmessung größer als die Breite wenigstens eines Teils dieses Langloches (3) ist, sowie mit elastischen Belastungsmitteln (15, 16), dadurch gekennzeichnet, daß dieses Langloch (3) ein Schlitz ist, daß zwischen dieser Schiene (1) und Fußplatte (10) ein einen Riegel (11) bildendes Element angeordnet ist, welches ein Langloch (12) in der allgemeinen Form eines S und mit einer Breite unter der Abmessung der Fußplatte (10) des Dorns (4), mit dem es verbunden ist, aufweist und welches zwischen einer ersten Verriegelungsstellung, in welcher die beiden Enden des Langloches (12) auf den Schlitz (3) der Schiene ausgerichtet sind, derart, daß zwei Fenster bestimmt werden, die den Dorn (4) in der einen oder anderen von zwei Endstellungen umschließen und verriegeln, und einer zweiten Stellung, in welcher der zwischen den Enden liegende Zwischenteil des S-förmigen Langloches (12) auf den Schlitz (3) der Schiene ausgerichtet ist und eine Verlagerung des Dorns (4) gestattet, beweglich ist, daß diese elastischen Belastungsmittel (15, 16) das einen Riegel (11) bildende Element in seiner ersten Stellung zu halten trachten, und daß Steuermittel (13, 14) dem einen Riegel (11) bildenden Element zur Verschiebung desselben in seine zweite Stellung gegen die Belastung der elastischen Mittel (15, 16) zugeordnet sind.

2. Vorrichtung nach Anspruch 1, dadurch gekennzeichnet, daß eine Führungsplatte (17), welche ein Führungslangloch (18) zur Führung der Fußplatte (10) des Dorns (4) der Umlenkung aufweist, zwischen dem einen Riegel (11) bildenden Element und der Säule (2) des Fahrzeugs angeordnet ist.

3. Vorrichtung nach Anspruch 1 oder 2, dadurch gekennzeichnet, daß die Steuermittel zwei Steuerelemente (13, 14), die beiderseits der Schiene (1) im oberen Teil und unteren Teil derselben angeordnet und für ein Zusammenwirken mit einem entsprechenden Rand des einen Riegel (11) bildenden Elements eingerichtet sind, zur Verschiebung desselben in die Stellung der Verschiebung des Dorns und damit der Umlenkung umfassen.

4. Vorrichtung nach irgendeinem der vorstehenden Ansprüche, dadurch gekennzeichnet, daß die elastischen Mittel (15, 16) zwischen dem einen Riegel (11) bildenden Element und der Schiene (1) auf der den entsprechenden Steuermitteln gegenüberliegenden Seite angeordnet sind.

5. Vorrichtung nach irgendeinem der vorstehenden Ansprüche, dadurch gekennzeichnet, daß die elastischen Mittel gekrümmte elastische Lamellen (15, 16) umfassen, deren eines Ende mit der Schiene (1) fest verbunden ist und deren anderes gegen das einen Riegel (11) bildende Element anliegt.

6. Vorrichtung nach irgendeinem der vorstehenden Ansprüche, dadurch gekennzeichnet, daß die Enden (11a, 11b) des einen Riegel (11) bildenden Elements abgerundet und für ein Zusammenwirken mit Teilen (1a, 1b) komplementärer Form der Schiene

**Claims**

1. Device for adjusting the position of a strap return element, in particular a safety belt, between two end positions, of the type comprising a guide rail (1) intended to be fixed to a post (2) of a vehicle and which comprises an opening (3) in this rail, a pin (4) for fixing a strap return element (5) which is movably engaged in this opening (3) and which is provided with a base (10) which has a larger dimension than the width of at least a part of this opening (3), as well as resilient biasing means (15, 16), characterized in that this opening (3) is a slot ; in that between this rail (1) and base (10), there is disposed an element forming a lock (11) which includes a generally S-shaped opening (12) and with a smaller width than the dimension of the base (10) of the pin (4) engaged therein, and which is movably mounted between a first locking position wherein the two ends of the opening (12) are opposite the slot (3) of the rail so as to define two apertures for arresting and locking the pin (4) in one or the other of the two end positions, and a second position wherein the intermediate portion of the S-shaped opening (12) between these ends is opposite the slot (3) of the rail so as to permit the displacement of the pin (4), in that these resilient biasing means (15, 16) tend to keep the element (11) forming the lock in its first position ; and in that control means (13, 14) are associated with this element (11) forming the lock so as to displace it towards its second position against the biasing of these resilient means (15, 16).

2. Device according to claim 1, characterized in that a guide plate (17) comprising a guide opening (18) for the base (10) of the strap return element is disposed between the element (11) forming the lock and the post (2) of the vehicle.

3. Device according to claim 1 or 2, characterized in that the control means comprise two control elements (13, 14) disposed on either side of the rail (1) in the upper portion and lower portion of the latter and each adapted for cooperating with a corresponding edge of the element (11) forming the lock, for displacing it and hence the strap return element, towards the position for displacing the pin (4).

4. Device according to any one of the preceding claims, characterized in that the resilient means (15, 16) are disposed between the element (11) forming the lock and the rail (1) on the side remote from the corresponding control means.

5. Device according to any one of the preceding claims, characterized in that the resilient means comprise bent resilient strips (15, 16) whereof one end is fixed to the rail 1 and the other bears on the element (11) forming the lock.

6. Device according to any one of the preceding claims, characterized in that the ends (11a, 11b) of the element (11) forming the lock are rounded and adapted for cooperating with portions (1a, 1b) of a complementary shape of the rail (1).

(1) eingerichtet sind.

FIG. 2

FIG.1